# FASCICULE DE BREVET EUROPEEN

(11) **EP 0 920 941 B1**
(45) Date de publication et mention de la délivrance du brevet: **24.04.2002**
(21) Numéro de dépôt: 98480084.7
(22) Date de dépôt: 01.12.1998
(51) Int. Cl.: B23B 29/034

(54) **Outil ajustable en diamètre**
Werkzeug mit verstellbaren Diameter
Tool with adjustable diameter

(30) Priorité: 08.12.1997 FR 9715454
(43) Date de publication de la demande: 09.06.1999
(73) Titulaire: Bourgogne, Pierre Marcel, F-06300 Nice (FR)
(72) Inventeur: Bourgogne, Pierre Marcel, F-06300 Nice (FR)

(56) Documents cités:
- DE-C- 61 615
- DE-C- 347 105
- FR-A- 735 462
- GB-A- 237 732
- GB-A- 589 954
- GB-A- 643 317
- GB-A- 191 518 181
- US-A- 2 090 718
- US-A- 3 664 755
- US-A- 3 853 422

## Description

L'invention concerne un outil de coupe polyvalent qui permet le travail des matériaux durs dont en particulier les métaux et le béton, les diverses opérations possibles étant, essentiellement et non limitativement, le perçage, l'alésage, le fraisage, le taraudage.

Un outillage comprenant les caractéristiques du préambule de la revendication 1 est connu du document US-A-3 853 422.

Ces différentes opérations sont habituellement exécutées en utilisant des outils qui sont d'une part spécialisés dans l'une ou l'autre de ces opérations et qui d'autre part nécessitent l'emploi d'un outil différent pour chaque diamètre de perçage, d'alésage, de taraudage ou de fraisage a réaliser, d'où l'obligation de posséder un très grand nombre d'outils différents qui sont onéreux dès lors que l'on désire exécuter des travaux variés.

Quand il s'agit de travaux répétitifs portant sur d'importantes séries il n'y a que peu d'inconvénients a devoir mettre en oeuvre un nombre plus ou moins grand d'outils spécialisés car l'importance des séries permet malgré tout l' amortissement normal d'un investissement lourd, par contre quand les travaux sont a réaliser à l'unité ou en petites séries et qu'ils sont variés il devient rapidement hors de question de disposer de tous les outils nécessaires surtout s'il s'agit de petites entreprises, d'artisans ou de simples bricoleurs particuliers.

Ainsi, pour s'en tenir au seul exemple des travaux de perçage dans les diamètres les plus courants, s'il est habituel de posséder un jeu de forets de 1 à 13 ou de 1 à 16 m/m de diamètre, très peu nombreux sont les particuliers ou les petites entreprises possédant des jeux complets de forets de 13 a 35 m/m et encore bien plus rare de posséder toute la gamme de forets de dixième en dixième de m/m ce qui représente, pour les diamètres courants s'échelonnant par exemple de 13 à 35 m/m un nombre de forets égal à 220..., ceci est vrai bien sûr également pour les autres opérations telles l'alésage, le fraisage et le taraudage.

Il est donc d'un intérêt majeur de pouvoir effectuer toutes ces opérations a l'aide d'un seul outil polyvalent quelque soit le diamètre du travail a effectuer, dans la limite bien entendu de la puissance de la machine d'entraînement, un seul outil permettant par exemple de forer des trous de 13 à 20 m/m de diamètre, puis un autre outil forant de 20 à 35 m/m. ce ou ces outils étant munis de plaquettes coupantes, aiguisables, mobiles. facilement intercheangeables et remplaçables pour le perçage, l'alésage et le fraisage et de plaquettes à " Dents " taraudantes pour le taraudage, le même outil polyvalent étant capable de recevoir soit des plaquettes de coupe tournantes, soit des plaquettes à " Dents " taraudantes tournantes, soit des plaquettes de coupe coulissantes, soit des plaquettes à " Dents " taraudantes coulissantes. Mais bien entendu il est également possible de préférer réserver un outil à un seul ou à plusieurs des types possibles de plaquettes.

C'est ce résultat qui est atteint grâce à la présente invention, qui est définie dans la revendication 1.

Les recherches concernant l'état antérieur de la technique n'ont permis de relever aucune trace de matériels connus comparables à ceux objets de la présente invention.

La description détaillée de ces outils polyvalents à plaquettes mobiles est donnée ci dessous et est illustrée à l'aide des figures 1 à 13.
La Fig 1 est une vue en élévation d'un outil polyvalent à plaquettes mobiles, la moitié gauche correspond a l'utilisation avec plaquettes de coupe tournantes, la moitié droite avec plaquettes de coupe coulissantes
La FIG 2 est une coupe suivant son grand axe d'un outil polyvalent avec plaquettes de coupe tournantes (la plaquette gauche normalement non visible sur cette coupe est cependant représentée en pointillés/tiretés pour une meilleure compréhension du dessin
La Fig 3 est une coupe A - A selon un plan perpendiculaire au grand axe de l'outil polyvalent dans la hauteur des plaquettes tournantes mobiles
La Fig 4 est une vue de détail d' une plaquette tournante taraudante
La Fig 5 est une vue de face d'une plaquette tournante permettant le fraisage de surfaces planes en bout de l'outil polyvalent et/ou le perçage et l'alésage de grands diamètres
La Fig 6 est une vue de détail d' une plaquette coulissante
La Fig 7 est une vue par la tranche d'une plaquette coulissante
La Fig 8 est est une coupe suivant son grand axe d'un outil avec plaquettes coulissantes coupantes ( à gauche ) et taraudantes ( à droite ), la plaquette gauche coupante normalement non visible sur cette coupe est cependant représentée en pointillés/tiretés pour une meilleure compréhension du système d'écartement des plaquettes à l'aide de vis à " Pas " à droite et à gauche
La Fig 9 est une coupe B - B selon un plan perpendiculaire au grand axe de l'outil polyvalent dans la hauteur des plaquettes coulissantes coupantes ( à gauche ) ou taraudantes ( à droite)
La Fig 10 est une vue de face d'une plaquette coulissante pour fraisage en bout d'outil
La Fig 11 est une coupe de détail, selon un plan perpendiculaire au grand axe, de l'outil polyvalent dans la hauteur de la zone de guidage, à échelle doublée
La Fig 12 est une vue de détail de la vis de fixation des deux demi-coquilles de guidage, à échelle doublée
La Fig 13 est une vue de détail des rainures réservées dans la partie aiguisable des plaquettes pour améliorer la coupe, à échelle quintuple

L'outil objet de la présente invention comprend un corps principal dont la section, perpendiculaire à son grand axe, est de forme généralement circulaire mais peut aussi être polygonale, hexagonale ou octogonale par exemple, il est compose de deux pièces principales:
- Le CORPS INTERNE : il est destiné à être mis en rotation à la main ou mieux par toutes machines tournantes, telles perceuses, fraiseuses, tours etc, il comprend une partie (1) cylindrique ou polygonale, par exemple hexagonale, surmontée d'une zone à section carrée (2) pour recevoir le " tourne à gauche" lors des opérations de taraudage manuelles, dans cette partie cylindrique peuvent également être usinés deux méplats (3) face à face permettant de faire tourner à la main le corps interne à l'aide d'une clé plate, ceci par exemple en cas de taraudage ou en cas de coincement de l'outil pendant le travail.

Cette partie cylindrique ou polygonale se prolonge par une autre section cylindrique filetée mâle (4) à pas assez petit ( par exemple au pas de 1 m/m dit pas de 100) et sur laquelle vient se visser le corps externe (5) de l'outil, cette zone filetée est elle même prolongée par une autre zone cylindrique (6) de diamètre plus faible dont l'autre extrémité se termine en forme de cône (7), la zone cylindrique (6) coulisse sans jeu dans l'évidement interne cylindrique (8) du corps (5).
Le cône (7) peut être usiné dans la masse à l'extrémité de la zone cylindrique (6) ou être constitué par une plaquette rapportée en matière très dure telle le carbure de tungstène.
- Le CORPS EXTERNE comprend un cylindre creux, fileté femelle dans sa partie supérieure (9) afin de pouvoir se visser sur le corps interne décrit ci avant, il comprend une " fenêtre " (10) à son autre extrémité dans laquelle viennent, prendre place les deux plaquettes de coupe ( perçage, alésage, fraisage ) ou de taraudage, la largeur de cette fenêtre est égale à l'épaisseur de deux plaquettes accolées, sans jeu.
   Cette fenêtre est fermée à sa partie basse par deux replats (11) de quelques m/m de hauteur séparés par une fente étroite (12) d'environ 1 m/m de largeur, dans cette zone sont logées des vis (13) dont le rôle est de centrer l'outil dans un avant-trou percé préalablement, cette même zone comporte également un trou central (14) permettant de maintenir fermement l'outil sans excentrement ni vibrations avec par exemple la contre-pointe d'un tour.
   Il est également avantageux de prévoir dans le corps externe (5) deux méplats (15) qui permettent de le maintenir fermement avec une clé plate lors par exemple du blocage de l'écrou (16) assurant le blocage des deux corps l'un par rapport à l'autre, cet écrou comportant lui même deux méplats (15 bis).

Outre ces deux pièces l'invention prévoit des plaquettes mobiles de coupe ou de taraudage en deux variantes différentes décrites à titre indicatif et d'exemple, elles ne limitent nullement les domaines de l'invention dont on ne sortirait pas en remplaçant les détails et les variantes décrits par tous autres équivalents.

1° Dans une première VARIANTE deux plaquettes mobiles (17) TOURNENT autour d'un axe-boulon (18) : cet axe traverse les deux plaquettes dans la hauteur de la fenêtre (10) du corps externe (5) décrit ci dessus et les deux parois (19) du corps externe adjacentes à la fenêtre , il comporte une tête, fraisée de préférence, munie d'une fente pour tournevis ou mieux d'un creux hexagonal aux normes des vis genre " ALLEN " ou " BTR ", se logeant dans l'une des deux parois latérales (19) de la fenêtre, il est fileté à son autre extrémité pour venir se visser dans l'autre paroi latérale de la fenêtre ce qui permet de maintenir les plaquettes en place et de serrer fortement et bloquer les deux plaquettes l'une contre l'autre.

Ces plaquettes (17) comportent deux prolongements latéraux (20) dont deux arêtes (21 et 22) sont coupantes : l'arête inférieure (22) pour les travaux de perçage et de fraisage, l'arête latérale externe (21) pour les travaux d'alésage, ces deux faces peuvent être rectilignes et former un angle à arêtes vives, ou être courbes, en particulier la face latérale pour les travaux d'alésage ou pour lisser les parois du trou percé.

En faisant tourner ces plaquettes (17) autour de l' axe (18) on peut obtenir n'importe quel diamètre de perçage, d'alésage ou de fraisage dans la limite de la longueur des prolongements latéraux (20), elle même conditionnée par la résistance du matériau constituant les plaquettes qui sera le plus souvent et non limitativement un acier trempé, un acier rapide, du carbure de tungstène ou certaines céramiques de haute dureté.

Quand les prolongements à faces coupantes (20) des plaquettes sont en position relevée ils ne dépassent pas du corps externe de l'outil, plus on les bascule vers le bas plus ils dépassent et plus le diamètre de travail augmente. A noter que ceci permet d'utiliser la partie inférieure du corps externe (5) comme guide dans un avant trou percé préalablement afin d'éviter les vibrations de l'outil et les excentrements éventuels en cours de travail, ceci surtout si la machine tournante mettant l'outil en rotation est peu rigide ou a des jeux relativement importants.

Pour les opérations de taraudage les plaquettes (23) comportent des prolongements latéraux terminés par des " Dents filetantes " (24) usinées aux cotes et aux normes des filetages habituels aux pas métriques, Whitworth, Anglais, ou autres.

Dans tous les cas ( perçage, alésage, fraisage, taraudage ) les deux plaquettes sont centrées symétriquement par rapport à l'axe principal de l'outil par le cône (17) terminant le prolongement cylindrique (6) du corps interne (1) qui en descendant plus ou moins à l'intérieur du corps externe (9) provoque le basculement progressif des plaquettes (17) jusqu'à obtention du diamètre de travail désiré, une fois celui ci atteint il suffit de bloquer l'écrou (16) sur la face supérieure du corps externe pour empêcher tout mouvement relatif entre corps interne et corps externe et donc toute modification du diamètre de travail.

La tranche supérieure (25) des prolongements (20) coupants ou taraudants , en contact avec le cône (17), est usinée avec un angle et une forme calculés de façon à ce que la descente du cône soit toujours proportionnelle à l'agrandissement du diamètre. Un léger chanfrein (26) est prévu sur l'arête de chacune des deux plaquettes en contact avec le cône permet d'avoir une surface de contact plaquette/cône plus importante qu'une simple arête vive afin d'éviter d'émousser cette arête et de réduire ainsi la précision du travail exécuté.

Dans ces conditions il est possible de graver sur l'outil des repères ou graduations (27 et 28 ) permettant de régler le diamètre de travail en fonction de la position du cône (17), les repères (27) sont constitués par des traits perpendiculaires au grand axe de l'outil et dont l'espacement est égal à la descente du cône quand le corps interne tourne d'un tour complet dans le corps externe, ainsi pour un filetage des corps interne et externe au pas dit de 100 ( 1m/m ) ces repères seront espacés de 1m/m , la descente du cône sera de 1m/m par tour et l'accroissement du rayon d'action des plaquettes sera également de 1m/m donc le diamètre de travail sera accru de 2 x 1 = 2 m/m.
Une autre série de repères (28) constituée de traits parallèles au grand axe de l'outil est gravée sur le corps externe (5), juste sous l'écrou (16), ces repères constituent une graduation en sous multiples des repères précédents par exemple en 0,10 ou 0,05 m/m ou en tout autre système de mesure.

2°- Dans une autre VARIANTE deux plaquettes (29-30-31) COULISSENT l'une par rapport à l'autre en s'écartant plus ou moins de l'axe principal de l'outil.
Ces deux plaquettes sont logées dans la fenêtre (10) d'un outil analogue à celui décrit ci dessus avec un corps interne et un corps externe analogues.
En bout d'outil les mêmes replats (11) séparés par une fente étroite (12) constituent des appuis faisant glissières pour les plaquettes mobiles dont la face inférieure est plane et rectiligne au moins dans la zone ne dépassant jamais en dehors du corps externe (5).
Comme ci dessus un axe-boulon (18) traverse les plaquettes non pas au travers d' un trou circulaire mais au travers d'une lumière en forme de " boutonnière " (32) prévue dans chacune des deux plaquettes afin que celles ci puissent s'écarter l'une par rapport à l'autre modifiant ainsi le diamètre de travail utile. Grâce à la fente étroite (12) le serrage du boulon (18) permet le blocage des plaquettes à la position choisie.
Comme ci dessus également le centrage des deux plaquettes par rapport à l'axe principal de l'outil est assuré par le cône (7) du corps interne de l'outil,
Ce centrage peut être encore amélioré en vissant une vis-pointeau (33) dans le trou central (14) prévu dans la zone de guidage et les replats (11), l'axe de cette vis se confond avec le grand axe de l'outil, elle peut dépasser sous les replats (11) et servir également de centre en bout d'outil en cas par exemple de travail avec un tour ceci afin d'obtenir un centrage parfait et une grande rigidité.
Comme pour les plaquettes tournantes un léger chanfrein (26) peut être réalisé sur l'arête de chaque plaquette au contact du cône de centrage (17) pour éviter d'émousser ces arêtes.

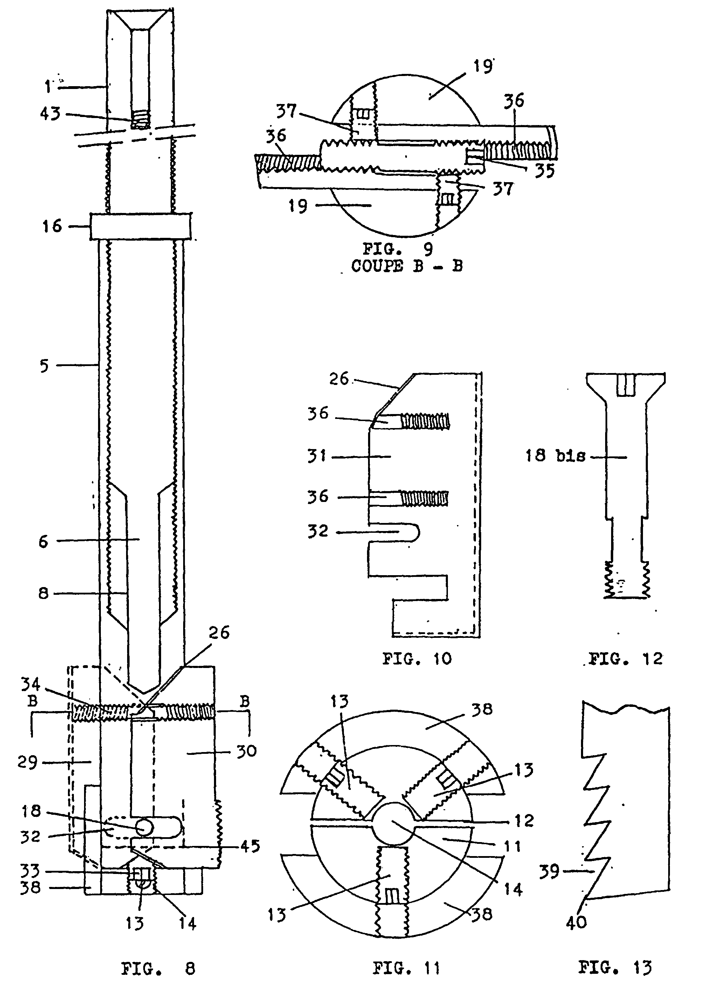

Les plaquettes (29-30-31) se recouvrent plus ou moins selon le diamètre de travail choisi, la partie inférieure de chaque plaquette peut ou bien être rectiligne (41) sur toute sa longueur en particulier pour certaines opérations de fraisage, ou bien, en particulier pour le perçage, la partie inférieure de chaque plaquette pouvant faire saillie de part et d'autre du corps externe aura généralement une face coupante inférieure en pente (42), son arête formant un angle inférieur à 90° avec le grand axe de l'outil; les faces latérales sont coupantes pour les travaux d'alésage ou comportent des " dents " usinées aux normes usuelles des pas de vis pour les travaux de taraudage.
Ces plaquettes sont réalisées dans les mêmes matières que pour les plaquettes tournantes.
Afin d'affiner et de rigidifier le positionnement relatif des plaquettes coulissantes l'une par rapport à l'autre il est possible de prévoir la mise en place entre les plaquettes de vis (34) dont un tiers environ de la longueur est fileté à droite à une extrémité et dont le tiers également de l'autre extrémité est fileté à gauche, le tiers central est lisse pour permettre le coulissement d'une plaquette par rapport à l'autre et donc la variation du diamètre de travail. Ces vis sans tête saillante comportent un évidement creux hexagonal (35) type ALLEN ou BTR, représenté sur la seule fig 9 qui est à suffisamment grande échelle. à une extrémité permettant de les faire tourner, cet évidement peut être remplacé par une simple fente pour tournevis, la rotation de ces vis permet l'écartement ou le rapprochement des plaquettes pour les régler avec une grande précision au diamètre désiré.
On peut prévoir une seule vis (34) ou mieux deux vis, l'une en partie haute des plaquettes au dessus de l'axe boulon (18), l'autre en partie basse.
Ces vis pénètrent sur la moitié de leur diamètre dans l'épaisseur de chacune des deux plaquettes comportant des évidements semi-cylindriques (36).
Des petites vis (37) sont également prévues pour bloquer les vis (34) à leur position exacte et les empêcher de tourner pendant le travail.

### Mise en oeuvre de ces outils polyvalents :

Dans les deux variantes il est prévu qu'un avant trou est d'abord réalisé avec un foret classique, cet avant trou sert de guide à l'extrémité de l'outil objet de la présente invention qui réalisera lui le travail de perçage, alésage, fraisage ou taraudage au diamètre définitif choisi.

### Ce dernier travail peut être réalisé en une ou deux passes :

Si l'accroissement de diamètre entre l'avant trou et le diamètre définitif de travail est faible une seule passe suffira, il suffit de régler l'outil au bon diamètre et de bloquer les plaquettes en bonne position.
Si pour une raison ou une autre on désire parfaire ce travail avec une très grande précision, le corps externe (5) de l'outil étant alors d'un diamètre inférieur à celui du trou que l'on vient de réaliser, l'extrémité de l'outil ne pourra plus être utilisé comme guide, dans ce cas les vis de centrage (13) logées dans l'extrémité inférieure de l'outil seront toutes dévissées d'un même nombre de tours et de fractions de tour pour venir au contact de la paroi du trou venant d'être réalisé ce qui assurera à nouveau le centrage de l'outil, il est ainsi possible de réaliser en particulier des passes de finition à moins d'un dixième de m/m près.

En cas où le diamètre fini est très supérieur à celui de l'avant trou il sera préférable d'exécuter le travail en deux passes, ne serait ce que parceque la machine tournante d'entraînement n'aurait pas la puissance nécessaire pour enlever en une seule passe une trop importante quantité de matériau. Il est donc prévu des paires de " DEMI COQUILLES " (38) d'un diamètre unique , pour chaque outil polyvalent, intermédiaire entre le diamètre de l'avant trou réalisé avec un foret classique et le diamètre final recherché, par exemple pour passer d'un diamètre 20 m/m à un diamètre 35 m/m il sera souvent utile de faire une passe intermédiaire d'environ 28 m/m de diamètre.
Ces demi coquilles ont un diamètre interne égal au diamètre du corps externe (5) de l'outil polyvalent et ont un diamètre extérieur, dans l'exemple choisi, de 28 m/m et s'insèrent sans jeu dans le trou réalisé lors de la première passe, elles servent donc de guide pour la 2 ème passe, ces demi coquilles sont fixées par un axe-boulon (18 bis) similaire à celui servant à maintenir les plaquettes, mais plus long, soit 28 m/m dans l'exemple choisi.
Pour éviter qu'elles ne se perdent quand elles ne servent pas les vis (18 bis) ont un logement (43) réservé dans le corps interne (1).
Ces demi coquilles comporteront des trous filetés permettant le dévissage des vis (13) de centrage qui pourront de la même façon être utilisées pour le guidage fin de l'outil au cours d'une ou plusieurs passes de finition,

Bien entendu des repères (27-28) facilitant la sélection du diamètre de travail sont prévus comme dans le cas des plaquettes tournantes.

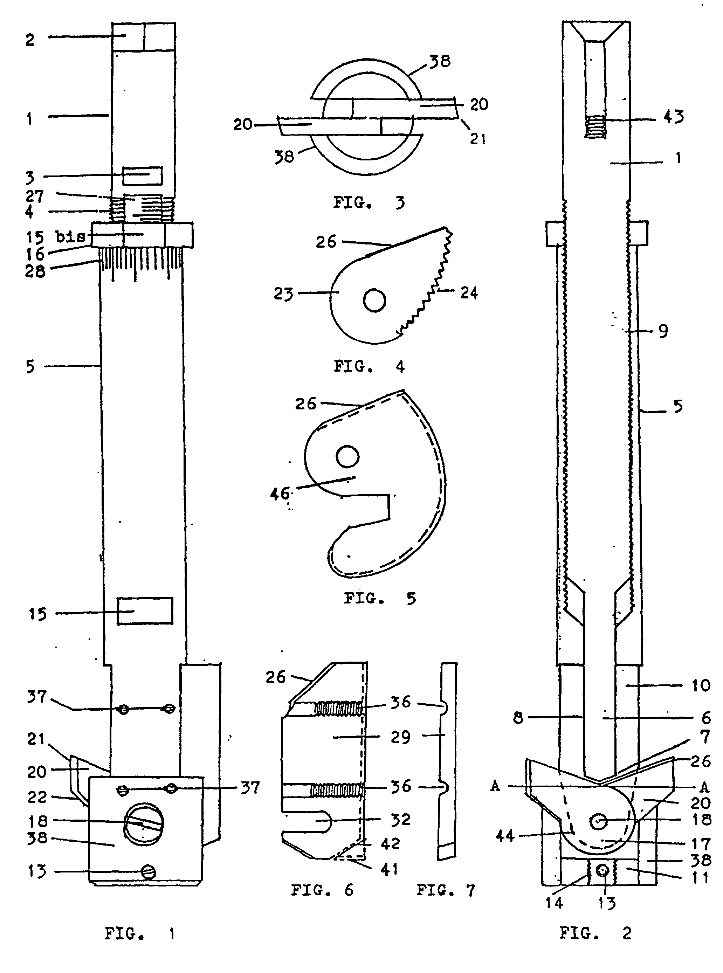

Des plaquettes, comme par exemple celles, tournantes (46), illustrées Fig.5 et coulissantes (31) illustrées Fig.10 permettent un travail sous l'extrémité de l'outil polyvalent pour des travaux de surfaçage ou de fraisage en particulier, dans ce cas l'extrémité de l'outil ne peut plus être utilisée comme guide. De nombreuses autres formes sont bien entendu possibles.

Dans les deux cas, de plaquettes tournantes ou coulissantes, l'outil peut être utilisé pour forer ou aléser dans le béton ou autres matériaux durs non métalliques, dans ce cas la forme des faces et arêtes de coupe sera différente de celle utilisée pour les métaux, leur arête coupante aura alors une forme semblable à celle des forets à béton classiques, il est dans ce cas possible soit d'utiliser des plaquettes spéciales ou bien de tailler à la meule la forme convenable d'arête dans des plaquettes destinées au travail du métal ceci est d'autant plus faisable que le matériau constituant les plaquettes est plus dur car l'usure est d'autant plus faible que le matériau des arêtes coupantes est plus dur.

Dans tous les cas les plaquettes coupantes peuvent comporter des striures (39) vues en coupe Fig. 13, qui est à échelle quintuple, réservées dans tout ou partie des zones coupantes des différents types de plaquettes, afin de réduire l'angle de coupe des arêtes coupantes (40) sans pour autant réduire les possibilités d'aiguisage en fonction de l'usure progressive des plaquettes, même si celle ci est faible compte tenu de la dureté plus ou moins grande des matériaux constitutifs des plaquettes. Ces striures facilitent la formation de copeaux et réduisent la puissance nécessaire.

Dans une version simplifiée le corps externe (5) de l'outil polyvalent est raccourci à son extrémité basse suivant les lignes pointillées (44,45) avec suppression des replats (11), des vis (13) et de la vis-pointeau (33), la tranche des plaquettes (17) est alors coupante sur tout le contour circulaire, et pour les plaquettes (29,30), qui n'auront plus que l'axe (18) comme appui, sur toute leur tranche inférieure. L'outil peut ainsi travailler EN BOUT sans nécessiter d'avant trou sauf éventuellement pour l'évacuation des copeaux, mais le guidage est moins précis.

## Revendications

1. Outillage extensible permettant de réaliser des opérations, d'usinage dans des diamètres différents, l'outillage étant polyvalent et permet de réaliser divers usinages qui sont, non limitativement, le perçage, l'alésage, le fraisage et le taraudage de la plupart des matériaux dont, entre autres, les métaux, matières plastiques, bois, briques, béton, en une ou plusieurs passes et dans une ou plusieurs plages de diamètres différents, ceci avec un seul et même outil muni de plaquettes mobiles interchangeables (17,20,23,29,30,31,46), **caractérisé en ce que** l'outillage possède un système de guidage qui se compose de vis (13) de centrage et de guidage fin dont l'axe est sensiblement perpendiculaire au grand axe de l'outil (1,5) et de demi-coquilles (38) fixées à l'extrémité travaillante de l'outil polyvalent qui assurent , pour les diamètres de travail importants, le centrage et le guidage, et renforcent la rigidité des plaquettes, ces demi-coquilles (38) permettent le passage des vis (13) de guidage fin qui restent donc opérationnelles, pour le fraisage en bout elles ne concourent pas au centrage et au guidage.

2. Outillage selon revendication 1, **caractérisé en ce que** le corps (5) de l'outil est conçu pour recevoir indifféremment et aussi bien des plaquettes (17,20,23,46) tournant autour d'un axe (18) que des plaquettes coulissantes (29,30,31), les plaquettes (17,20,23,29,30,31,46) travaillent aussi bien radialement qu'axialement.

3. Outillage selon revendication 1 et 2, **caractérisé en ce qu'**il est conçu pour permettre d'usiner des filetages intérieurs par utilisation des plaquettes (23,30).

4. Outillage selon revendication 1 et 2, **caractérisé en ce qu'**il est conçu pour permettre le perçage et le fraisage en bout de l'outil (5) par utilisation des plaquettes (31,46).

5. Outillage selon revendications 1,2,3 **caractérisé en ce que** l'extrémité du corps (5) de l'outil est conçue pour, quelque soit le type des plaquettes utilisées (17,20,23,29,30), servir de guide rigide et de centrage, à l'intérieur d'un avant trou percé préalablement.

6. Outillage selon revendications 1 à 5, **caractérisé en ce que** l'outil (1,5) est conçu pour permettre, quelque soit le type des plaquettes tournantes utilisées (17,20,23,46) un réglage très fin et indéréglable du diamètre à l'aide d'un filetage à faible pas (9), réglage visualisé par des repères gradués (27,28) gravés et/ou fixés sur le corps de l'outil (1,5).

7. Outillage selon revendication 1 à 6, comportant des vis à pas gauche/droite réglant l'écartement des plaquettes coulissantes, **caractérisé en ce que** les vis (34) sont bloquées au diamètre voulu par des vis (37) pour éviter tout dérèglage du diamètre en cours d'usinage.

8. Outillage selon revendications 1 à 7, **caractérisé en ce que** la pièce intérieure (1) filetée mâle est prolongée par une partie cylindrique (6), usinée dans la même masse, et qui est terminée par un cône (7) de haute dureté assurant le centrage et le blocage haut des plaquettes (17,20,23,29,30,31,46) ce cône peut être usiné dans la même masse à l'extrémité de la partie cylindrique (6) ou être constitué par une plaquette rapportée en carbure de tungstène ou autre matière très dure.

9. Outillage selon revendications 1 8, **caractérisé en ce que** une vis pointeau (33) de grande dureté complète le centrage et le blocage des plaquettes (17,20,23,29,30,31,46) à leur base, elle permet également le centrage de l'extrémité travaillante de l'outil polyvalent dans la machine tournante d'entraînement, sauf dans le cas de travail en bout avec les plaquettes (31,46).

10. Outillage selon revendications 1,2, 4 à 9, **caractérisé en ce que** les parties coupantes des plaquettes (17,20,29,31,46) peuvent, pour améliorer l'angle de coupe, comporter des stries ou rainures (39) parallèlement à leurs 'arêtes travaillantes dans toute la zone pouvant être aiguisée, ces plaquettes sont aiguisables à de nombreuses reprises, soit en angle aigu soit en angle obtus en fonction de la nature des matériaux travaillés, par exemple le fer et le béton.

## Claims

1. Extensible tools which allow carrying out manufacturing operations in the different diameters, **characterized by** the fact that the tools are polyvalent and can be used to carry out different manufacturing operations such as, among others, drilling, reaming, milling and tapping of most of the materials, including among others metals, plastics, wood, brick, concrete, once or several times and with one or more different diameters, and this with only one tool fitted with mobile interchangeable plaques (17, 20, 23, 29, 30, 31, 46), the tools have a guiding system consisting of screws (13) for centering and fine guides whose axle is perpendicular to the tools' main axle (1,5) and of half-shells (38) fixed at the working extremity of the polyvalent tool. In the case of large working diameters they ensure the centering and guiding and reinforce the plaques' rigidity. These half-shells (38) allow for the passage of the screws (13) for fine guiding which thus remain operational, for end milling, but they do not contribute to the centering and guiding.

2. Tools according to claim 1, **characterized by** the fact that the tools' body (5) is conceived in a manner to receive any plaques (17,20,23,46) rotating on an axle (18) and also sliding plaques (29, 30, 31), the plaques (17, 20, 23, 29, 30, 31, 46) working radially as well as axially.

3. Tools according to claims 1 and 2, **characterized in** a way that allows for the milling of interior threading by means of the plaques (23,30).

4. Tools according to claims 1 and 2, **characterized by** being conceived in a way which allows for the drilling and reaming at the end of the tool (5) by means of the plaques (31,46).

5. Tools according to claims 1, 2, 3 **characterized by** the fact that the extremity of the tool's body (5) is conceived for serving as a rigid guide and centering at the inside of a first hole drilled beforehand, regardless of the type of plaques used (17, 20, 23, 29, 30).

6. Tools according to claims 1 to 5, **characterized by** the fact that the tool (1, 5) is conceived to allow for a very precise adjustment, which remains well in place, of the diameter by means of slow threading (9) regardless of the type of rotating plaques used (17, 20, 23, 46). This adjustment is visualized by graduated indicators (27, 28), which are engraved and / or fixed on the tool's body (1,5).

7. Tools according to claims 1 to 6 equipped with screws with left/right threads which adjust the sliding plaques' distance, **characterized by** the fact that the screws (34) are blocked at the diameter required by the screws (37) in order to prevent any alteration of the diameter during the manufacturing process.

8. Tools according to claims 1 to 7, **characterized by** the fact that the interior male threaded part (1) is prolonged by a cylindrical part (6), manufactured in the same mass, and at the end of which there is a cone (7) conceived for long wear ensuring the centering and upper blocking of the plaques (17, 20, 23, 29, 30, 31, 46). This cone can be manufactured in the same mass at the end of the cylindrical part (6) or can consist of an added plaque of tungsten carbide or any other very hard material.

9. Tools according to claims 1 to 8, **characterized by** the fact that a needle screw (33) of extreme hardness completes the centering and blocking of the plaques (17, 20, 23, 29, 30, 31, 46) at their base. It also allows for the centering of the polyvalent tool's working extremity in the rotating machine driver, with the exception of the work at the end with the plaques (31, 46).

10. Tools according to claims 1, 2, 4 to 9, **characterized by** the fact that the cutting parts of the plaques (17, 20, 29, 31, 46) can, in order to improve the cutting angle, include ridges or grooves (39) which are parallel to their working edges within the entire area which can be sharpened, these plaques can frequently be sharpened either at an acute angle or at an obtuse angle according to the nature of the material machined, for example iron and concrete.

## Patentansprüche

1. Verstellbares Werkzeug für Bearbeitungsaufgaben in verschiedenen Durchmessern, **dadurch gekennzeichnet, dass** das Werkzeug vielseitig einsetzbar und somit für diverse Arbeiten geeignet ist wie - nicht erschöpfend - Bohren, Ausbohren, Fräsen und Gewindebohren in die Mehrheit der Werkstoffe wie - unter anderem - Metalle, Kunststoffe, Holz, Ziegel, Beton, in einem oder mehreren Gängen und in einem oder mehreren Durchmesserbereichen und zwar mit einem einzigen Werkzeug, das mit auswechselbaren, beweglichen Platten (17,20,23,29,30,31,46) bestückt ist. Das Werkzeug besitzt ein Führungssystem bestehend aus Zentrier- und Feinführungsschrauben (13), deren Achse deutlich senkrecht zur großen Werkzeugachse (1,5) liegt, und aus Halbschalen (38), die am Arbeitsende des Mehrzweckwerkzeugs befestigt sind und bei großen Arbeitsdurchmessern die Zentrierung und Führung sicherstellen sowie die Steifigkeit der Platten erhöhen; diese Halbschalen (38) erlauben die Durchführung der Feinführungsschrauben (13), die somit ihre Funktion sicherstellen können, sie sind beim Stirnfräsen an der Zentrierung und an der Führung unbeteiligt.

2. Werkzeug nach Anspruch 1 **dadurch gekennzeichnet, dass** der Körper (5) des Werkzeugs unterschiedslos für die Aufnahme sowohl der sich um eine Achse (18) drehenden Platten (17,20,23,46) als auch der Schiebeplatten (29,30,31) ausgebildet ist, wobei die Platten (17,20,23,29,30,31,46) sowohl in radialer als auch axialer Richtung arbeiten.

3. Werkzeug nach Anspruch 1 und 2, **dadurch gekennzeichnet, dass** es für die Bearbeitung von Innengewinden mittels Einsatz der Platten (23,30) ausgebildet ist.

4. Werkzeug nach Anspruch 1 und 2, **dadurch gekennzeichnet, dass** es für das Bohren und Stirnfräsen mittels Einsatz der Platten (31,46) ausgebildet ist.

5. Werkzeug nach Anspruch 1,2,3, **dadurch gekennzeichnet, dass** das Ende des Werkzeugkörpers (5) unabhängig vom Typ der eingesetzten Platten (17,20,23,29,30) dafür ausgebildet ist, in einem vorhergehend gebohrten Vorloch als steife Führungs- und Zentriereinrichtung zu dienen.

6. Werkzug nach Anspruch 1 bis 5, **dadurch gekennzeichnet, dass** das Werkzeug (1,5) unabhängig vom Typ der eingesetzten Drehplatten (17,20,23,46) derart ausgebildet ist, dass eine nicht verstellbare Feineinstellung des Durchmessers mit Hilfe eines Gewindes mit kleiner Steigung (9) möglich ist, Einstellung, die mit am Werkzeugkörper (1,5) eingravierten und/oder befestigten Strichzeichen (27,28) visualisiert wird.

7. Werkzeug nach Anspruch 1 bis 6 mit Schrauben mit Links-/Rechtsgewinde zur Einstellung des Abstands zwischen den Schiebeplatten, **dadurch gekennzeichnet, dass** die Schrauben (34) mit Schrauben (37) auf den gewünschten Durchmesser festgeklemmt werden, um eine Verstellung des aktuellen Bearbeitungsdurchmessers zu verhindern.

8. Werkzeug nach Anspruch 1 bis 7, **dadurch gekennzeichnet, dass** das Innenteil (1) mit Außengewinde durch ein zylindrisches, im selben Stück ausgebildetes Teil (6) mit einem an seinem Ende befindlichen Kegel (7) von großer hoher Härte verlängert ist, der die Zentrierung und die obere Klemmung der Platten (17,20,23,29,30,31,46) sicherstellt; dieser Kegel kann in einem Stück am Ende des zylindrischen Teils (6) ausgebildet werden oder aus einer aufgesetzten Platte aus Wolframkarbid oder einem anderen, sehr hartem Werkstoff bestehen.

9. Werkzeug nach Anspruch 1 bis 8 **dadurch gekennzeichnet, dass** eine Klemmschraube (33) von großer Härte die Zentrierung und die Blockierung der Platten (17,20,23,29,30,31,46) auf ihrem Sitz ergänzt und außerdem die Zentrierung des Arbeitsendes des Mehrzweckwerkzeugs in der Antriebs-Drehmaschine - außer bei Stirn-Bearbeitung mit den Platten (31,46) - erlaubt.

10. Werkzeug nach Anspruch 1,2, 4 bis 9, **dadurch gekennzeichnet, dass** die Schnitt-Teile der Platten (17,20,29,31,46) zur Verbesserung des Schnittwinkels Rillen oder Nuten (39) parallel zu ihren Arbeitskanten auf dem ganzen Schleifbereich aufweisen können; diese Platten lassen sich vielmals je nach Beschaffenheit des bearbeiteten Werkstoffs - zum Beispiel Eisen und Beton - entweder spitzwinklig oder stumpfwinklig nachschleifen.
